# EUROPEAN PATENT SPECIFICATION

(11) **EP 3 380 974 B1**
(45) Date of publication and mention of the grant of the patent: **18.03.2020**
(21) Application number: 16801741.6
(22) Date of filing: 18.11.2016
(51) Int. Cl.: G06F 8/41, G06F 9/455, G06F 21/14

(54) **METHOD TO GENERATE A SECURE CODE**
VERFAHREN ZUR ERZEUGUNG EINES SICHEREN CODES
PROCÉDÉ POUR GÉNÉRER UN CODE SÉCURISÉ

(30) Priority: 25.11.2015 EP 15306866
(43) Date of publication of application: 03.10.2018
(73) Proprietor: Thales Dis France SA, 92190 Meudon (FR)
(72) Inventor: GARREAU, Eric, 13881 GEMENOS Cedex (FR)
(74) Representative: Thomas, Christine Marie Catherine
(86) International application number: PCT/EP2016/078133
(87) International publication number: WO 2017/089237

(56) References cited:
- US-A1- 2008 288 921

## Description

### FIELD OF THE INVENTION

The present invention relates to a method to generate a code to be stored in a memory in order to be later executed by a microprocessor.

The invention also pertains to a code as obtained by applying said method and to a computer readable media storing such a code for it to be executed by a microprocessor.

### BACKGROUND OF THE INVENTION

Today, most vendors are proposing Software Development Kits which allow to apply various obfuscation methods to an input code. These methods are efficient against existing tools like disassemblers which can help attackers to reverse the application execution logic. Indeed obfuscation methods enable binary formats to be invalid, symbols to be mangled, garbage code to be inserted etc...

Other approaches imply a specific Virtual Machine engine where static data become executable code only at runtime. In such solutions, the original or initial code is converted into a specific assembly for which no reverse tools exists, defeating or at least slowing attackers' attempts.

Anyway, whether the protection comes from an indirect virtual machine or a direct "garbage" code, there is a definitive method for breaking it: capturing the execution assembly trace and then crunching it back to a static "simpler" code. It allows to analyze it in order to identify basic macro-blocs patterns, and at last to produce a clear-text disassembly out of them.

Even with ultimate Virtual Machines which decrypt the specific VM operation code instructions, named opcodes, just before they are executed, the initial application algorithm must be executed due to the functional need of producing the expected behavior, and thus it will be revealed by the real execution trace.

The tools allowing to capture an assembly trace and to crunch it back to an exploitable code are not widely available and thus vendors estimate that their SDKs are sufficient. However, the always progressing development of attack tools reveals the necessity to produce secure codes able to resist to such attacks.

Further alternative and advantageous solutions would, accordingly, be desirable in the art.

US 2008/0288921 discloses a system for code obfuscation. Randomly selected instruction sequences are replaced with equivalent instruction sequences in order to obfuscate the code.

### SUMMARY OF THE INVENTION

The invention is defined by the appended independent claims. The dependent claims define preferred embodiments. The present invention aims at avoiding, or at least making more difficult the above-mentioned malicious attacks. Thus, the invention concerns the capacity to generate software protected against both static and dynamic analysis.

The present invention is defined, in its broadest sense, as a method to generate a code to be stored in a memory in order to be later executed by a microprocessor, comprising the steps of:
- generating initial operation code (opcode) in abstract assembly language;
- interpreting each abstract assembly opcode using at least two different virtual machine engines logics, producing disjoined sequences of target assembly opcodes, each sequence implementing the corresponding virtual machine logic needed to interpret one assembly opcode;
- randomly choosing one of the at least two sequences of target assembly opcodes for each initial opcode;
- merging extremities of chosen sequences of target assembly opcodes in compliance with opcode boundaries within each interpreted target assembly opcode and with data flow,
- storing the resulting code for subsequent execution.

The first step consists in obtaining an operation code that would enable to perform software instructions if classically iterated. It is here noted that the operation code can be preliminary generated at another place and at another point of time in some embodiments. This means that the invention can indeed be applied to any previously existing operation codes. The invention then generates a replacement code that will replace the previously existing code in a much more secure format. According to other embodiments, the operation codes generation can be done specifically just before the other steps of the invention. In this case, the on-the-fly generated operation codes are replaced, for example in memory or to disc, by the resulting codes according to the invention. In any case, the resulting codes are then stored and replace the previously existing operation codes or the on-the-fly generated operation codes. In the second step, the invention then iterates on initial operation code instructions (opcode) expressed in their initial assembly language to transpose, using at least two different virtual machine engines logics, each initial assembly opcode, producing at least two disjoined sequences of replacement target assembly opcodes, each sequence implementing the corresponding virtual machine logic needed to interpret one initial assembly opcode, as it would have been observed in the capture of the execution trace of the equivalent Virtual machine.

The third one randomly chooses one of the at least two binary conventions for translating the consecutive sequences to replacement sequences assembly opcodes for consecutive initial opcodes.

The fourth one merges extremities of chosen sequences of replacement assembly opcodes in compliance with opcode boundaries within each replacement target assembly opcode and with data flow constraints, because the order of actual initial operations must be preserved.

The invention is based on multiple concepts, combined altogether in order to create a complex obfuscation of the initial program:
- The concept of a double-dual space,
- The concept of replaying a captured Execution Trace,
- The concept of the implementation of a Virtual Machine internal main loop,
- The concept of a binary code convention for a given Application Binary Interface,
- The concept of random code interleaving.

The concept of interleaving assumes that when two different sequences of software code are fully independent, this property allows to execute them one after the other, regardless the order of execution. As an extend, this property also allows to create a random mix of instructions which compose these two sequences, provided that each respective initial internal sequence order is kept, and produce the expected result of both executed sequences in the end.

Explicitly, random code interleaving requires that, for each sequence of code, all individual processor instructions which compose one sequence:
- can't use the same processor registers that the other sequence uses,
- can't refer to the same memory addresses that the other sequence uses.

The concept of a fixed binary code convention for a given Application Binary Interface can be found in various places, and on Wikipedia for instance:
- https://en.wikipedia.org/wiki/Application_binary_interface

Even if the invention does not fully implement all precise details of a generic Application Binary Interface, it relies on the principle of using a specific binary convention associated with a specific execution environment (as target assembly opcodes implementing the corresponding virtual machine logic). In other words, and in the context of this invention, it means that when multiple different execution environments are used at the same time on the same processor, then each one would use its own convention, which fully differs from the others. For instance:
- the execution environment 1 could exclusively use registers 1 to 4,
- the execution environment 2 could exclusively use registers 5 to 8,
- the execution environment 3 could exclusively use registers 9 to 12.

In this example, the concept of combining different binary code conventions at the same time and on the same processor would allow to apply the concept of random code interleave, and thus all binary sequences from all different execution environments could be mixed altogether and produce the same computational result in the end.

The concept of a Virtual Machine used to emulate another execution environment, and specifically the principles of a Virtual Machine processing a sequence of opcodes in its internal main loop implementing the concept of the instruction cycle, can be found in various places, and on Wikipedia for instance:
- https://en.wikipedia.org/wiki/Virtual_machine
- https://en.wikipedia.org/wiki/Emulator
- https://en.wikipedia.org/wiki/Instruction_cycle
- https://en.wikipedia.org/wiki/Opcode

The Instruction Cycle is the bottom-line of all processors, whether they are real or virtual, and it refers to the fine-grain processing elementary step which happens billions of times per second in modern machines. This Instruction Cycle relies on the concept of Opcode, for Operation Code, which is used to identify all different elementary processing treatments that the execution engine can do. At the heart of the Instruction Cycle main loop, the fetcher selects the next Opcode to be processed, then the decoder analyzes all bits of the Opcode value and the execution engine performs the behavioral steps which are associated with this Opcode value.

In the case of a physical processor, all parts of the Instruction Cycle are implemented with hardware wires and logical gates, typically etched on a semiconductor chip. In the case of a virtual processor, all parts of the Instruction Cycle are implemented by a program called an Emulator, which is responsible for providing a new virtual execution environment running in a real execution environment. In this typical Emulator,
- the fetcher is a piece of program which reads Opcodes from disk or memory,
- the decoder is a piece of program which compares the Opcode value with each items of the list of supported Opcodes,
- the execution engine is a set of independent program functions which are dedicated for the processing of each Opcode, and one of these functions is selected by the decoder in order to process the behavior of the current Opcode.

The concept of replaying a captured Execution Trace, referring to the capability of debugging a secure program by observing its actual execution, can be found in various places, for instance:
- https://en.wikipedia.org/wiki/Tracing_(software)
- https://software.intel.com/en-us/articles/program-recordreplay-toolkit

The Execution Trace of an Emulator main loop processing its Instruction Cycle reveals the structure of the Virtual Machine, because all elementary steps for the fetcher, the decoder and the Opcode's specific execution can be immediately identified, and extracted as obvious individual components by a software researcher or an attacker (as target assembly opcodes implementing the corresponding virtual machine logic). Moreover, the global extraction task to retrieve all initial opcodes is very easy because the execution trace reveals a set of repeating patterns made of specific sequence of Opcodes, which are perfectly identified as components because the boundaries between these patterns must be deterministic, as this program runs in a coherent execution environment and thus implements a unique fixed binary convention, implying that it is impossible to observe a random interleave at the boundary.

At last, this invention implements the concept of a double-dual space, which can be found in various places, and on Wikipedia for instance:
- https://en.wikipedia.org/wiki/Dual_space#Double_dual

The global process of the invention can be seen as a first transposition of each Opcode of the initial program into a dual representation using one execution function of a random Emulator logic which processes the expected behavior of the initial Opcode and produces an associated Execution Trace (interpreted opcode), and back into a double-dual execution context of replacement sequences of instructions with the same behavior than the initial Opcodes, but randomly interleaved thanks to the fact that each replacement sequence will uses a different binary code convention than its adjacent.

The invention combines all concepts defined hereinbefore, in order to replace a classical program by its very complex equivalent, transposed in a set of parallel virtual execution environments implementing different fixed binary conventions, and this property allows to apply the concept of random interleave at the boundaries between the processing of each Opcode. In other words, a software researcher or an attacker could still capture the Execution Trace of a program protected by the invention, but the identification of patterns would be made very complex by the fact that:
- The sequence of instructions used for processing each Opcode is not constant, and selected among a set of potential sequences of instructions producing the same behavior although they differ on their internal logic and on their fixed binary code convention,
- The boundary between each pattern of the fetch/decode/execute trace sequence would be blurred by the fact that choosing different binary code conventions allows to implement a random interleave,
- As a result, no tool is currently able to process this kind of Execution Trace in order to reverse its raw contents back to the initial semantic, and a malevolent software researcher or attacker would have to create a specific tool to perform this operation, which would need to:
- create a system to remove the random interleaved mix of different instruction sequences using different code binary conventions, and restore equivalent "perfect" boundaries,
- enumerate all fixed binary code convention used in this Execution Trace,
- understand all different semantics expressed in different binary code convention in order to attach semantic Opcode names to various execution traces,
- substitute the full sequence of instructions of fetch/decode/execute by its equivalent unique Opcode which has a meaning in the underlying execution context.
- The invention itself, which aims at obfuscating an initial sequence of code, can be expressed as an iteration of the following steps:
- get one initial Opcode from the initial program
- randomly select one symbolic sequence of instructions which performs the expected behavior, as if it was the execution sequence that an Emulator main loop would have executed in order to process the behavior of this Opcode, but without the fetch/decode subparts,
- randomly translate this symbolic sequence into its chosen binary code convention, while taking care of not reusing the same binary code convention used for the previous Opcode replacement,
- make a random interleave of this replacement sequence with the previous replacement sequence associated with the previous Opcode, which is possible because the two contiguous sequences use different binary code conventions.

As the description of this invention switches from the initial context of the program to its dual emulated representation and back to a double-dual execution context of randomized replacement sequences, all explanations enclosed herein are thus complex to read, and proper understanding requires to define an adapted wording in order to remove ambiguous interpretations:
- "initial" refers to items which are bound to the input program which needs to be protected,
- "transposed" refers to the dual space of the Virtual execution environment, where each initial Opcode is replaced by the Execution Trace that would be produced by an execution function processing the behavior of this Opcode (or interpreted opcode),
- "replacement" refers to the double-dual space of the final protected execution environment, where each initial Opcode is replaced by interleaved execution sequences of Execution Traces representing the initial Opcodes, and using different binary code conventions.

This invention proposes to add a new protection layer against attacks, in order to make it harder for attackers to reverse the code, even by capturing the assembly execution trace. Therefore, the method according to the present invention allows reducing the risks of malicious attacks. At least, the attacks are more complex to carry out for a malicious attacker. The invention indeed enhances the security of the generated code, anticipating future publications explaining how to reverse obfuscated code by crunching the execution assembly trace.

The overall principle of the invention is to make "as if" there were at least two Virtual Machine engines interpreting virtual opcodes, each one interpreting one opcode after the other, and thus producing an execution trace of at least two different logics, but interlaced at their boundaries. The initial opcodes are thus replaced by equivalent transposed execution traces, produced as if each initial opcode had been interpreted by a Virtual Machine engine logic implementing the same behavior of the initial opcode.

After the initial opcodes have been transposed to at least two different Virtual Machine logics, thus producing Virtual Machine execution traces with a behavior equivalent to the initial opcodes, these sequences are then translated to disjoined binary convention logics, creating replacement sequences of opcodes for each initial opcode. Then the invention uses a switch to randomly choose a random selection of one replacement sequence among the available ones, but using a different binary convention than the previous replacement opcode. More than two Virtual Machines logics and more than two binary conventions can be used according to the principles of the invention. The random selection is combined with a random merger in order to create an interleave of consecutive replacement sequences at assembly level, being possible because two consecutive sequences use two different binary conventions. At last the obtained assembly code back is packed into the final application as if it was standard code, and neither VM abstract opcodes nor a VM logic remains in the final application. It is advantageously stored for example as a .exe to be later loaded as such and executed.

Of course, this protection must be combined with other existing classes of obfuscation techniques: strings encryption, etc.

As a particular feature, code generation logics of the different virtual machines do not use the same patterns and the same registers.

This feature defines the differences as generally recognized between two virtual machines having different logics and binary code convention. In particular, different logics and binary code convention leads to the use of different registers and different patterns.

In a particular embodiment, the step of randomly choosing one of the at least two sequences of target (or replacement) assembly opcodes for each initial opcode is done for sets of contiguous initial opcodes.

In this embodiment, sets of initial opcodes are processed together while a Virtual Machine sequence is chosen. A same VM logic thus applies to each initial opcode of the set of contiguous initial opcodes. Sizes of the initial opcodes' sets can be fixed, for example blocks of five initial opcodes processed together all along the generation of the code according to the invention, or can vary regularly or randomly during the generation of the code according to the invention.

According to a preferred embodiment, the merging step is randomly performed.

In this embodiment, instructions as found at extremities of each block of replacement assembly code are randomly mixed from one virtual machine logic or from the other, this random mix being possible by the fact that consecutive replacement sequences are using different binary conventions. As the invention must not break neither execution nor data flow of the initial code, this interleave is only made on the boundaries of replacement sequences, implementing the actual Virtual Machine logic, and avoiding the core subpart of the transposed sequence which processes the exact behavior than the initial opcode. The overlap decision when it is switched from one VM logic to another VM logic or from one binary convention to another is not deterministic. It renders any fix pattern research even more difficult.

The invention also relates to a code as obtained by implementing the method of the invention.

Such a code has a specific structure due to the random alternance of at least two VM logics all along the stored final static code.

It also relates to a computer readable media storing a code according to the invention for the code to be executed by a microprocessor.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 schematically shows initial opcodes and generation of transposed sequences of opcodes (or interpreted opcodes) using two different Virtual Machine logics;
- Figure 2 schematically shows the random selection of one of the sequences for each initial opcode, after their respective transposed sequences have been translated into a binary code convention which differs from the one which has been used in the previous replacement sequence of opcodes;
- Figure 3 schematically shows the presence of cores and boundaries within each piece of replacement transposed (or interpreted) opcode and
- Figure 4 schematically shows the software as obtained once the merging step performed.

### DETAILED DESCRIPTION OF EMBODIMENTS OF THE INVENTION

The abstract pseudo-code logic of the protection according to the invention is explained in the following drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further the features described in the description, the drawing and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does exclude a plurality. The same elements have been designated with the same reference numerals in the different drawings. For clarity, only those elements and steps which are useful to the understanding of the present invention have been shown in the drawings and will be described.

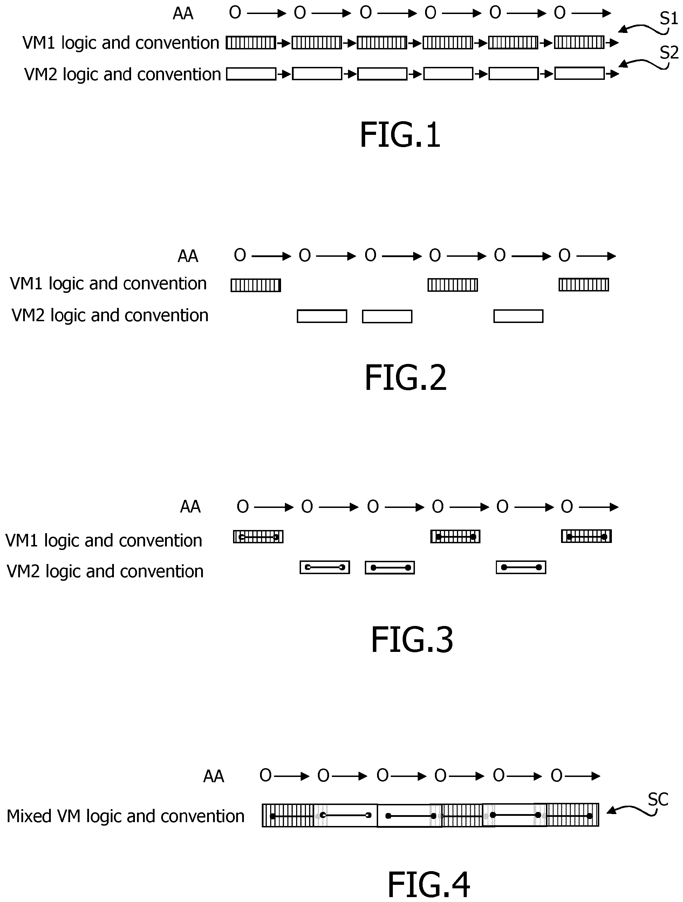

Figure 1 schematically shows the first steps of the invention. On the first line of figure 1, the successive initial opcodes O as expressed by their generation in their initial assembly language AA. On the second line is shown the result of the replacement sequences of transposed opcodes by a first virtual machine VM1 having its own logic applied on the successive initial opcodes as shown on the first line. It consists in several successive blocks of replacement sequences of instructions, which can be seen as execution traces of the Virtual Machine internal logic for each interpretation of the transposed initial opcode, and all using the same binary code convention for this VM. The third line shows the result of the interpretation of the successive opcodes by another different virtual machine, and using a different binary code convention. Different successive blocks of instructions having disjoined logics and binary code conventions are thus obtained. More than two such lines of blocks of instructions could be obtained in the case more than two virtual machines and binary code conventions would be applied.

Figure 2 schematically shows the random selection of one of the sequences for each initial opcode by presenting the effect of a switcher on the two lines of replacement sequences as shown on figure 1. It is here noted that a one initial opcode giving one block of instruction basis is here applied but sets of N to M contiguous opcodes could be gathered to give one block of instructions issued from the same VM logic and binary code convention, N and M being various small size integers and at least of a size one scale inferior to the total number of processed opcodes.

The software development kit thus produces assembly by combining the two logics as shown on figure 1. The software development kit has further boundaries for "data available" or "data required". It corresponds to...

Before and after the core code which has to be maintained as such, replacement code can be randomly merged provided that the control and data flows of the initial opcodes are preserved. The core code is schematically shown on figure 3 by a line between two points inside each block of replacement instructions generated according to the virtual machine logic.

When a virtual opcode is emulated by a virtual machine engine, a replacement sequence of instructions as a pattern is used in order to produce the same behavior than this virtual opcode, but this replacement sequence also contains all required technical code to manage the transposed execution in this virtual environment, like for instance managing the internal memory mapping or storing the virtual processor mask which will be available to the next virtual instruction. To have disjoined virtual machines, the patterns of these transposed sequences of code have to be different. Those patterns can be seen as a core subpart really performing the operation as requested by initial opcodes, combined with technical code before and after this core subpart, these initial and final subparts (or extremities) being only relevant to the context of the Virtual Machine but not interfering with the initial control and data flows of the initial logic. When virtual machines transposed code is translated to different binary code conventions, those cores subparts and the initial and final technical subparts or extremities must use the same binary code convention for each replacement sequence, allowing two consecutive replacement sequences using different binary code conventions to be interleaved on the initial and final technical subparts.

Each virtual machine engine logic thus provides, for one initial opcode, a replacement sequence of instructions containing a core subpart and initial and final technical subparts or extremities not relevant for the operation corresponding to the initial opcode to be executed. The invention exploits the fact that the transposed sequences of apparent execution traces made by different Virtual Machine logics are translated to equivalent replacement sequences by randomly choosing a potentially different binary code convention for consecutive replacement sequences. This property ensures that initial and final technical subparts or extremities can be merged without incidence on the execution of the operations as initially coded in the initial opcode.

Figure 4 schematically shows the software SC as obtained once the merging step performed. The flattened resulting code SC is thus an expanded code, equivalent to different execution traces made by different virtual machine engines and randomly interleaved, thus removing the boundaries between sequences of replacement sequences. This protection requires the attacker to reverse different virtual machine logics in order to retrieve all initial opcodes behaviors, after the attacking tool has been specifically tailored in order to understand that different binary code conventions are randomly used, and that the replacement sequences are randomly interleaved, thus hardening the process of identifying the boundaries which allow to extract the unitary replacement sequences. The final step of the attack path looks like a classical attack against the engine logic of a Virtual Machine, although there is no static virtual machine engine to study, and no execution cycle loop to easily identify where the Virtual Machine engine is located. Even if the code SC can be disassembled using standard tools, it produces very long blocks of raw assembly, without respecting the standard binary code convention that debuggers assume in order to disassemble opcodes. Scrambled opcodes with different logics randomly interleaved at their boundaries make it harder for detecting macro blocks and creating a specific disassembler attack tool. Classical attack on virtual machine execution trace by tracing the beginnings of each virtual machine patterns as applied for each interpreted opcode is no more possible. The overlapping of the initial and final technical subparts or extremities of each replacement sequence or blocks of real assembly instructions enables to render very difficult the detection of any beginning of a virtual machine pattern. Reversing the obtained code SC is thus rendered very difficult as an attacker cannot easily at all detect these beginning and further have to cope with disjoined logics at each of the blocks. The use of two virtual machine logics already enables a better enhanced security of the code SC and the use of more than two virtual machine logics would even strengthen the protection.

With the invention, the access to initial opcodes hidden inside the transposed execution traces of virtual machine logics is thus very difficult, because the actual VM main loops do not exist anymore, thus preventing an attacker to easily reverse them. No factorization is thus accessible as diversification is very strong. Everything is necessary in the obtained code.

This invention is thus able to resist to any dynamic reverse toolchain for attacking protected execution assembly trace, because the resulting execution trace can only be factorized by using the same attack tool which needs to be specifically developed for making a static reverse and/or debug attack. It forms a secure software development kit.

## Claims

1. Method to generate a code (SC) to be stored in a memory in order to be later executed by a microprocessor, comprising the steps of:
- generating initial operation codes (opcodes) in abstract assembly language (AA);
- interpreting each abstract assembly language opcode (O) using at least two different virtual machine engines (VM1, VM2) logics, producing disjoined sequences (S1, S2) of target assembly opcodes, each sequence (S1, S2) implementing the corresponding virtual machine logic needed to interpret one assembly language opcode (O);
- randomly choosing one of the at least two sequences (S1, S2) of target assembly opcodes for each initial abstract assembly language opcode (O);
- merging extremities of chosen sequences of target assembly opcodes in compliance with opcode boundaries within each interpreted target assembly opcode and with data flow,
- storing the resulting code (SC) for subsequent execution, wherein code generation logics of the different virtual machines (VM1, VM2) use different patterns and different registers, wherein the step of randomly choosing one of the at least two sequences (S1, S2) of target assembly opcodes for each initial opcode is done for sets of contiguous initial opcodes (O), wherein the merging step is randomly performed.

2. Computer program which, when executed by a computer, cause the computer to carry out the method of claim 1.

3. Computer readable media storing a computer program according to claim 2 for the computer program to be executed by a microprocessor.

## Patentansprüche

1. Verfahren zum Erzeugen eines Codes (SC), der erst gespeichert und später von einem Mikroprozessor ausgeführt wird, wobei das Verfahren folgende Schritte umfasst:
- Generierung von ersten Befehlscodes (Opcodes) in abstrakter Assemblersprache (AA);
- Interpretation jedes Opcodes (O) in abstrakter Assemblersprache unter Verwendung von mindestens zwei Logiken der virtuellen Maschinen (VM1, VM2), wobei getrennte Abfolgen (S1, S2) der gewünschten Assembler-Opcodes erzeugt werden, wobei jede Abfolge (S1, S2) die entsprechende Logik der virtuellen Maschine, die zur Interpretation eines Assemblersprachen-Opcodes (0) erforderlich ist, implementiert;
- Die zufällige Auswahl einer von mindestens zwei Abfolgen (S1, S2) der gewünschten Assembler-Opcodes für jeden ersten Opcode (O) in abstrakter Assemblersprache;
- Zusammenführen von Anfang und Ende ausgewählter Abfolgen der gewünschten Assembler-Opcodes unter Berücksichtigung des Datenflusses und der Opcode-Grenzen innerhalb jedes interpretierten und gewünschten Assembler-Opcodes;
- Speichern des erzeugten Codes (SC) zur späteren Ausführung
wobei die Codeerzeugungslogiken der verschiedenen virtuellen Maschinen (VM1, VM2) unterschiedliche Muster und unterschiedliche Register verwenden
wobei die zufällige Auswahl einer der mindestens zwei Abläufe (S1, S2) der gewünschten Assembler-Opcodes für jeden ersten Opcode für Sätze von zusammenhängenden ersten Opcodes (O) getroffen wird
wobei die Codes nach dem Zufallsprinzip zusammengeführt werden

2. Computerprogramm, das, wenn es von einem Computer ausgeführt wird, den Computer veranlasst, das Verfahren gemäß Anspruch 1 auszuführen.

3. Computerlesbarer Datenträger zur Speicherung eines Computerprogramms nach Anspruch 2, damit das Computerprogramm von einem Mikroprozessor ausgeführt wird.

## Revendications

1. Procédé pour générer un code (SC) devant être stocké dans une mémoire afin d'être exécuté ultérieurement par un microprocesseur, comprenant les étapes suivantes consistant à :
- générer des codes d'opération (opcodes) initiaux en langage d'assemblage abstrait (AA) ;
- interpréter chaque opcode (O) de langage d'assemblage abstrait à l'aide d'au moins deux logiques différentes de moteurs de machines virtuelles (VM1, VM2), produire des séquences (S1, S2) disjointes d'opcodes d'assemblage de cible, chaque séquence (S1, S2) implémentant la logique de machine virtuelle correspondante nécessaire pour interpréter un opcode (O) de langage d'assemblage ;
- choisir au hasard l'une des deux séquences (S1, S2) au moins d'opcodes d'assemblage de cible pour chaque opcode (O) initial de langage d'assemblage abstrait ;
- fusionner les extrémités de séquences choisies d'opcodes d'assemblage de cible conformément aux limites des opcodes au sein de chaque opcode d'assemblage de cible interprété et au flux de données,
- stocker le code (SC) résultant en vue d'une exécution ultérieure,
les logiques de génération de code des différentes machines virtuelles (VM1, VM2) utilisant différents modèles et différents registres
l'étape consistant à choisir au hasard l'une des deux séquences (S1, S2) au moins d'opcodes d'assemblage de cible pour chaque opcode initial étant effectuée pour des ensembles d'opcodes (O) initiaux contigus
l'étape de fusion étant effectuée de manière aléatoire.

2. Programme informatique qui, lorsqu'il est exécuté par un ordinateur, fait en sorte que l'ordinateur exécute le procédé selon la revendication 1.

3. Support lisible par ordinateur stockant un programme informatique selon la revendication 2 pour le programme informatique devant être exécuté par un microprocesseur.
